# EUROPEAN PATENT APPLICATION

(11) **EP 2 808 905 A1**
(43) Date of publication of application: **03.12.2014**
(21) Application number: 13182076.3
(22) Date of filing: 28.08.2013
(51) Int. Cl.: H01L 31/042

(54) **Frame of photovoltaic panel and L-shaped corner joint thereof**

(30) Priority: 30.05.2013 TW 102119127
(71) Applicant: Gintech Energy Corporation, Jhunan Township, Miaoli County 350 (TW)
(72) Inventor: Chen, Yu-Min, 350 Miaoli County (TW); Lu, Jiunn-Chenn, 350 Miaoli County (TW); Chang, Hsu-Ting, 350 Miaoli County (TW); Chen, Chih-Ching, 350 Miaoli County (TW)
(74) Representative: Zimmermann & Partner

(57) **Abstract**

A frame of a photovoltaic panel includes at least one L-shaped corner joint at least one first frame body and at least one second frame body. The L-shaped corner joint includes a support, a first joint arm and a second joint arm respectively disposed on different surfaces of the support, wherein the first joint arm and the second joint arm respectively have at least one first riveting hole and at least one second riveting hole. The first frame body has a first engaging groove therebetween. The first joint arm is inserted in the first engaging groove. Part of the first inner frame plate is caved in the first riveting hole. The second frame body has a second engaging groove. The second joint arm is inserted in the second engaging groove. Part of the second inner frame plate is caved in the second riveting hole.

## Description

### BACKGROUND

### Technical Field

Embodiments of the present invention relate to a frame of a photovoltaic panel. More particularly, embodiments of the present invention relates to the frame of the photovoltaic panel and the L-shaped corner joint thereof.

### Description of Related Art

Since global oil reserves are decreasing year by year, the energy crisis has become a focusing issue all over the world. It is urgent for developing an alternative energy. In many alternative energies, a solar energy has an advantage that it will never run out, and thus is the most visible focus all the time.

At present, collecting the solar energy is generally implemented by using a photovoltaic panel. To protect and secure the photovoltaic panel, the manufacturer usually employs a frame to encompass the photovoltaic panel. A typical frame of the photovoltaic panel includes four stick-shaped frame bodies and four L-shaped corner joints. The frame bodies are sequentially adjoined to construct a rectangular frame. Opposite ends of the L-shaped corner joint is respectively inserted in the engaging grooves of adjacent frame bodies, so as to secure the frame bodies.

However, the L-shaped corner joint is only contacted with the surface of the frame body, such that the L-shaped corner joint can only block the frame body from moving by the static friction force therebetween. Because the frame bears high tension forces when transporting the panel or installing the whole solar system, if the tension force born by adjacent two frame bodies is higher than the static friction force, the frame bodies move. As such, the current L-shaped corner joint cannot effectively secure the frame bodies.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

A frame of a photovoltaic panel is provided, in which the L-shaped corner joint can improve the ability for securing the frame bodies.

In accordance with one embodiment of the present invention, a frame of a photovoltaic panel includes at least one L-shaped corner joint at least one first frame body and at least one second frame body. The L-shaped corner joint includes a support, a first joint arm and a second joint arm. The first joint arm and the second joint arm are respectively disposed on different surfaces of the support, wherein the first joint arm and the second joint arm respectively have at least one first riveting hole and at least one second riveting hole. The first frame body has a first outer frame plate and a first inner frame plate. The first outer frame plate and the first inner frame plate are spatially separated and define a first engaging groove therebetween. The first joint arm is inserted in the first engaging groove. Part of the first inner frame plate is caved in the first riveting hole. The second frame body has a second outer frame plate and a second inner frame plate. The second outer frame plate and the second inner frame plate are spatially separated and define a second engaging groove therebetween. The second joint arm is inserted in the second engaging groove. Part of the second inner frame plate is caved in the second riveting hole.

In accordance with another embodiment of the present invention, a L-shaped corner joint includes a support, a first joint arm and a second joint arm. The support has a first connecting surface and a second connecting surface. The first connecting surface adjoins the second connecting surface. The first joint arm is disposed on the first connecting surface. The first joint arm has at least one first riveting hole. The first riveting hole has a first diameter D1 substantially satisfying: 5mm ≦ D1 ≦ 25mm. The second joint arm is disposed on the second connecting surface. The second joint arm has at least one second riveting hole. The second riveting hole has a second diameter D2 substantially satisfying: 5mm ≦ D2 ≦ 25mm.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 is a perspective view of the frame of the photovoltaic panel in accordance with one embodiment of the present invention;
Fig. 2 is an explosive view of the frame shown in Fig. 1;
Fig. 3 is a cross-sectional view of the frame taken along A-A' line shown in Fig. 1;
Fig. 4 is a perspective view of the L-shaped corner joint in accordance with the first embodiment of the present invention;
Fig. 5 is a cross-sectional view of the L-shaped corner joint taken along C-C' line shown in Fig. 4;
Fig. 6 is a cross-sectional view of the L-shaped corner joint in accordance with the second embodiment of the present invention;
Fig. 7 is a perspective view of the L-shaped corner joint in accordance with the third embodiment of the present invention; and
Fig. 8 is a perspective view of the L-shaped corner joint in accordance with the fourth embodiment of the present invention.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

### Embodiment 1

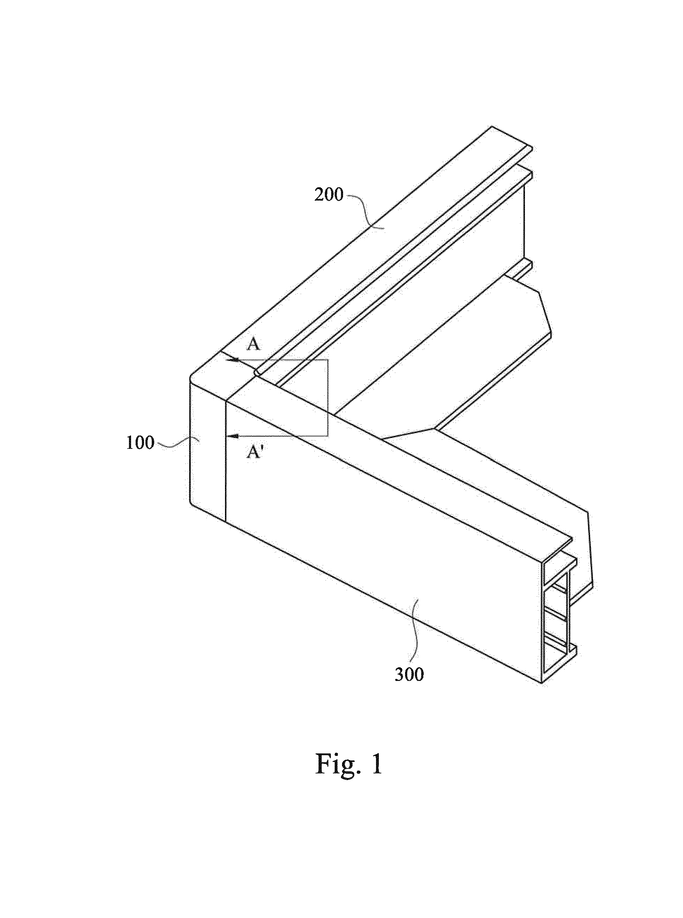

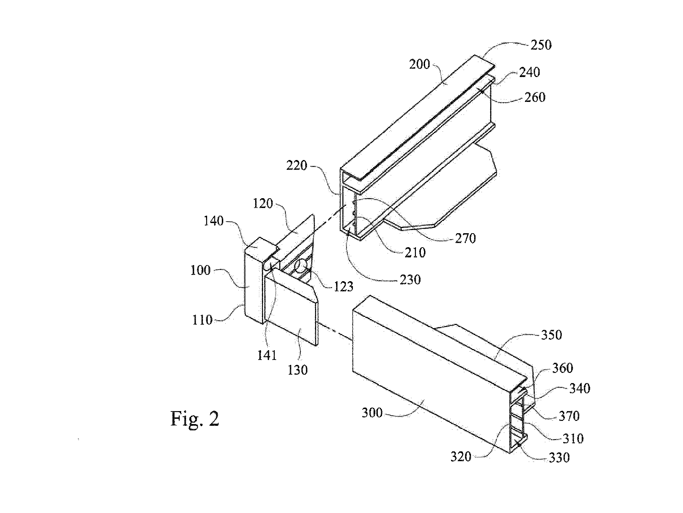

Fig. 1 is a perspective view of the frame of the photovoltaic panel in accordance with one embodiment of the present invention. Fig. 2 is an explosive view of the frame shown in Fig. 1. As shown in Figs. 1 and 2, in this embodiment, the frame of the photovoltaic panel includes a L-shaped corner joint 100, a first frame body 200 and a second frame body 300. The L-shaped corner joint 100 is connected between the first frame body 200 and the second frame body 300. In particular, as shown in Fig. 2, the L-shaped corner joint 100 includes a support 110, a first joint arm 120 and a second joint arm 130. The first joint arm 120 and the second joint arm 130 are respectively disposed on different surfaces of the support 110. The first frame body 200 has a first inner frame plate 210 and a first outer frame plate 220. The first inner frame plate 210 and the first outer frame plate 220 are spatially separated and define a first engaging groove 230 therebetween. The first joint arm 120 is inserted in the first engaging groove 230. Similarly, the second frame body 300 has a second inner frame plate 310 and a second outer frame plate 320. The second inner frame plate 310 and the second outer frame plate 320 are spatially separated and define a second engaging groove 330 therebetween. The second joint arm 130 is inserted in the second engaging groove 330.

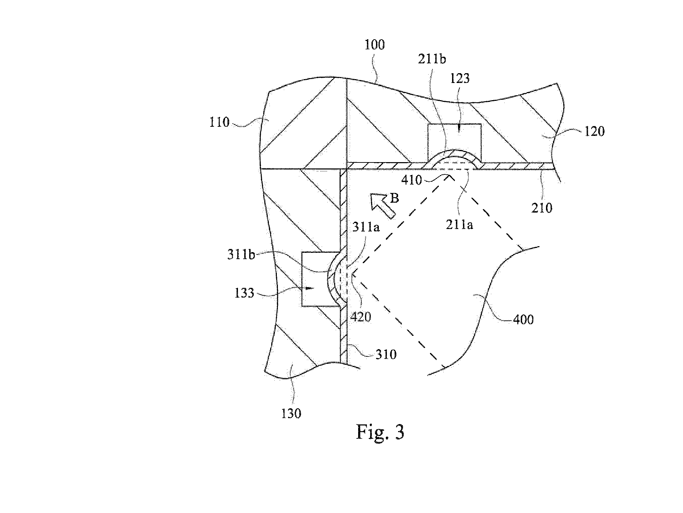

Fig. 3 is a cross-sectional view of the frame taken along A-A' line shown in Fig. 1. As shown in Fig. 3, the first joint arm 120 has a first riveting hole 123. Part of the first inner frame plate 210 is caved in the first riveting hole 123, thereby engaging with the first riveting hole 123. Similarly, the second joint arm 130 has a second riveting hole 133. Part of the second inner frame plate 310 is caved in the second riveting hole 133, thereby engaging with the second riveting hole 133. Therefore, the L-shaped corner joint 100 can employ the first riveting hole 123 and the second riveting hole 133 to respectively secure the first inner frame plate 210 and the second inner frame plate 310.

In particular, the manufacturer can operate a riveting machine 400 to make it move along the arrow B, so that the first rivet 410 of the riveting machine 400 can be in contact with the first partial plate 211a of the first inner frame plate 210, and the second rivet 420 of the riveting machine 400 can be in contact with the second partial plate 311a of the second inner frame plate 310. When the riveting machine 400 keeps moving along the arrow B, the first rivet 410 presses the first partial plate 211a of the first inner frame plate 210, so as to make the first partial plate 211a to being caved in the first riveting hole 123, thereby forming a bended first partial plate 211b. Similarly, the second rivet 420 presses the second partial plate 311a of the second inner frame plate 310, so as to make the second partial plate 311a to being caved in the second riveting hole 133, thereby forming a bended second partial plate 311b.

Therefore, the first riveting hole 123 can secure the first partial plate 211b bended therein, and the second riveting hole 133 can secure the second partial plate 311 b bended therein, thereby improving the ability for securing the frame bodies.

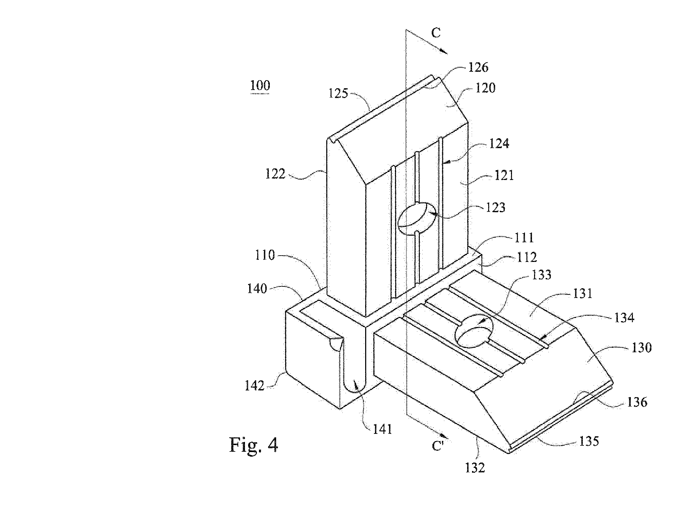

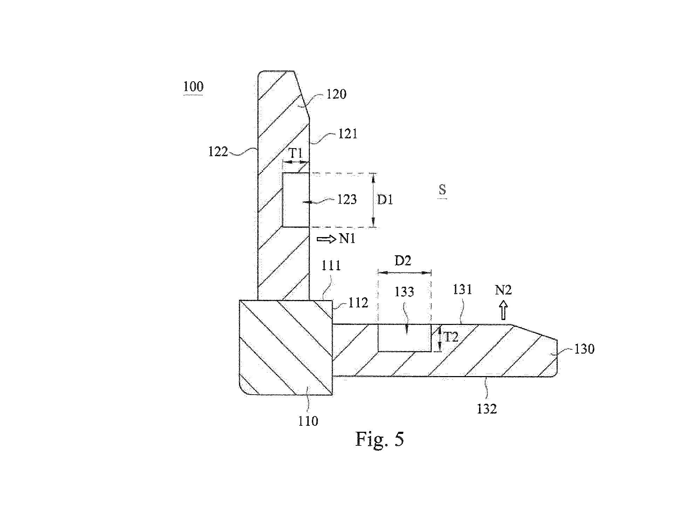

Fig. 4 is a perspective view of the L-shaped corner joint 100 in accordance with the first embodiment of the present invention. Fig. 5 is a cross-sectional view of the L-shaped corner joint 100 taken along C-C' line shown in Fig. 4. In this embodiment, as shown in Figs. 4 and 5, the support 110 has a first connecting surface 111 and a second connecting surface 112. The first connecting surface 111 adjoins the second connecting surface112. In some embodiments, the first connecting surface 111 and the second connecting surface 112 are substantially perpendicular. The first joint arm 120 is disposed on the first connecting surface 111, and the second joint arm 130 is disposed on the second connecting surface 112.

Reference is now made to Figs. 2 and 4. When the first joint arm 120 inserts in the first engaging groove 230, the first connecting surface 111 is in contact with the end of the first frame body 200. Similarly, when the second joint arm 130 inserts in the second engaging groove 330, the second connecting surface 112 is in contact with the end of the second frame body 300. In other words, the ends of the first frame body 200 and the second frame body 300 are respectively in contact with the first connecting surface 111 and the second connecting surface 112, instead of colliding with each other.

In this embodiment, as shown in Fig. 4, the first joint arm 120 has a first inner surface 121 and a first outer surface 122. The first outer surface 122 is opposite to the first inner surface 121. The first riveting hole 123 is disposed on the first inner surface 121. Similarly, the second riveting arm 130 has a second inner surface 131 and a second outer surface 132. The second outer surface 132 is opposite to the second inner surface 131. The second riveting hole 133 is disposed on the second inner surface 131.

The first inner surface 121 and the second inner surface 131 are adjacent. In other words, as shown in Fig. 5, the normal direction N1 of the first inner surface 121 crosses to the normal direction N2 of the second inner surface 131 in the space S, so that the riveting machine 400 (See Fig. 3) moving in the space S can simultaneously press the first inner frame plate 210 and the second inner frame plate 310 (See Fig. 3) to the first inner surface 121 and the second inner surface 131 respectively.

As shown in Fig. 2, in some embodiments, the first frame body 200 and the second frame body 300 can be aluminum extrusions. However, because aluminum is soft, when the first partial plate 211a and the second partial plate 311a (See Fig. 3) bear the forces from the rivets, only the surfaces in contact with the rivets deform, and the surfaces immediately adjacent to the first riveting hole 123 and the second riveting hole 133 may not deform, thereby being difficult to cave in the first riveting hole 123 and the second riveting hole 133. Therefore, embodiments of the present invention provide preferred diameters of the first riveting hole 123 and the second riveting hole 133, so as to allow the first partial plate 211a and the second partial plate 311a to successfully cave therein.

In particular, as shown in Fig. 5, the first riveting hole 123 has a first diameter D1 substantially satisfying: 5mm ≦ D1 ≦ 25mm. Similarly, the second riveting hole 133 has a second diameter D2 substantially satisfying: 5mm ≦ D2 ≦ 25mm. Within the foregoing range, the first riveting hole 123 and the second riveting hole 133 can effectively make the first partial plate 211a and the second partial plate 311a (See Fig. 3) to cave therein.

It is understood that the term "substantially" in this context shall generally mean within 15 percent, preferably within 10 percent, and more preferably within 5 percent of a given value or range. For example, "the first diameter D1 substantially satisfies: 5mm ≦ D1 ≦ 25mm" covers the range that 5x85% ≦ D1 ≦ 25×115%, and preferably covers the range that 5×90% ≦ D1 ≦ 25×110%, and more preferably covers the range that 5x95% ≦ D1 ≦ 25×105%.

In this embodiment, as shown in Fig. 5, the first riveting hole 123 has a first depth T1 along the direction substantially parallel to the normal direction N1 of the first inner surface 121. The first depth T1 substantially satisfies: 1.5mm ≦ T1 ≦ 7mm. The second riveting hole 133 has a second depth T2 along the direction substantially parallel to the normal direction N2 of the second inner surface 131. The second depth T2 substantially satisfies: 1.5mm ≦ T2 ≦ 7mm. Preferably, the first depth T1 substantially satisfies: 3mm ≦ T1 ≦ 6mm, and the second depth T2 substantially satisfies: 3mm ≦ T1 ≦ 6mm.

In this embodiment, as shown in Fig. 4, the first joint arm 120 and the second joint arm 130 respectively have a plurality of first guiding rails 124 and a plurality of second guiding rails 134. Referring to Fig. 2, the first frame body 200 and the second frame body 300 respectively include a plurality of first ribs 270 and a plurality of second ribs 370. The first ribs 270 are protruded on the first inner frame plate 210, and are exposed in the first engaging groove 230. Similarly, the second ribs 370 are protruded on the second inner frame plate 310, and are exposed in the second engaging groove 330. Referring to Figs. 2 and 4, when the first joint arm 120 is inserted in the first engaging groove 230, and the second joint arm 130 is inserted in the second engaging groove 330, the first ribs 270 can insert in the first guiding rails 124, and the second ribs 370 can insert in the second guiding rails 134. Therefore, the first ribs 270 and the second ribs 370 would not be rubbed against the inner surfaces of the first joint arm 120 and the second joint arm 130. Further, the first guiding rail 124 and the second guiding rail 134 can also locate the first ribs 270 and the second ribs 370.

In some embodiments, as shown in Fig. 4, a lengthwise direction of each of the first guiding rails 124 is substantially perpendicular to the first connecting surface 111. Similarly, a lengthwise direction of each of the second guiding rails 134 is substantially perpendicular to the second connecting surface 112. Moreover, the first ribs 270 and the second ribs 370 (See Fig. 2) are respectively parallel to the first guiding rails 124 and the second guiding rails 134, so as to insert in the first guiding rails 124 and the second guiding rails 134. It is understood that the "lengthwise direction" of an element in this context refers to the direction parallel to the longest edge of the element.

In some embodiments, as shown in Fig. 4, the first joint arm 120 includes a first guiding structure 125 and a second guiding structure 126. The first guiding structure 125 and the second guiding structure 126 are disposed on a front end of the first joint arm 120 opposite to the support 110. The second joint arm 130 includes a third guiding structure 135 and a fourth guiding structure 136. The third guiding structure 135 and the fourth guiding structure 136 are disposed on a front end of the second joint arm 130 opposite to the support 110. The first guiding structure 125, the second guiding structure 126, the third guiding structure 135 and the fourth guiding structure 136 are chamfers, such as arc-shaped chamfers or inclined-surface chamfers. As such, these guiding structures can make the first joint arm 120 and the second joint arm 130 to insert in the first engaging groove 230 and the second engaging groove 330 more smoothly.

In this embodiment, as shown in Fig. 2, the first frame body 200 includes a first clamping plate 240 and a second clamping plate 250. The first clamping plate 240 connects the first inner frame plate 210 and the first outer frame plate 220. The second clamping plate 250 is connected to the first outer frame plate 220, and is spatially separated from the first inner frame plate 210. The first clamping plate 240 and the second clamping plate 250 are substantially parallel, and define a first clamping groove 260 therebetween. The first clamping groove 260 can used to clamp an edge of the photovoltaic panel (not shown). Similarly, the second frame body 300 includes a third clamping plate 340 and a fourth clamping plate 350. The third clamping plate 340 connects the second inner frame plate 310 and the second outer frame plate 320. The fourth clamping plate 350 is connected to the second outer frame plate 320, and is spatially separated from the second inner frame plate 310. The third clamping plate 340 and the fourth clamping plate 350 are substantially parallel, and define a second clamping groove 360 therebetween. The second clamping groove 360 can used to clamp another edge of the photovoltaic panel. The L-shaped corner joint 100 includes a panel holding part 140. The panel holding part is disposed on the support. The panel holding part 140 has a holding groove 141, which can be used to hold the corner of the photovoltaic panel. When the first frame body 200 and the second frame body 300 are both assembled on the L-shaped corner joint 100, the first clamping groove 260, the second clamping groove 360 and the holding groove 141 are spatially communicated.

In this embodiment, as shown in Fig. 4, the panel holding part 140 includes an outer corner 142. The outer corner 142 is arc-shaped, so as to prevent the user from being injured due to the sharp edge.

### Embodiment 2

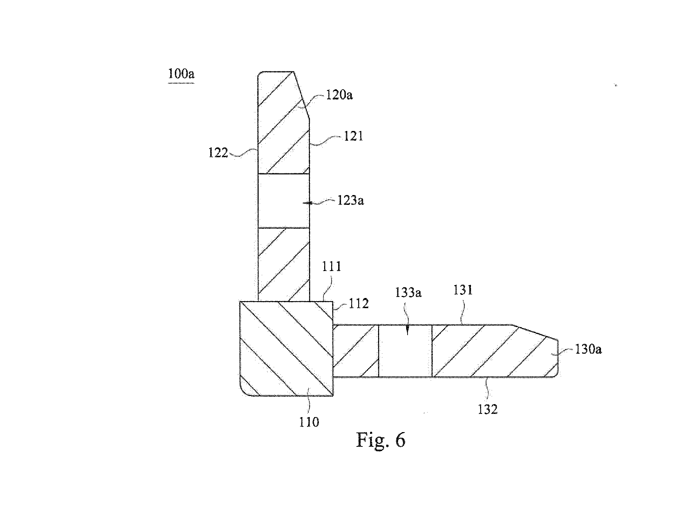

Fig. 6 is a cross-sectional view of the L-shaped corner joint 100a in accordance with the second embodiment of the present invention. The main difference between this embodiment and the first embodiment is that: the first joint arm 120a and the second joint arm 130b respectively have a first riveting hole 123a and a second riveting hole 133a. The first riveting hole 123a crosses the first inner surface 121 and the first outer surface 122. The second riveting hole 133a crosses the second inner surface 131 and the second outer surface 132. In other words, the first riveting hole 123a and the second riveting hole 133a are both through holes, so as to facilitate the riveting process.

### Embodiment 3

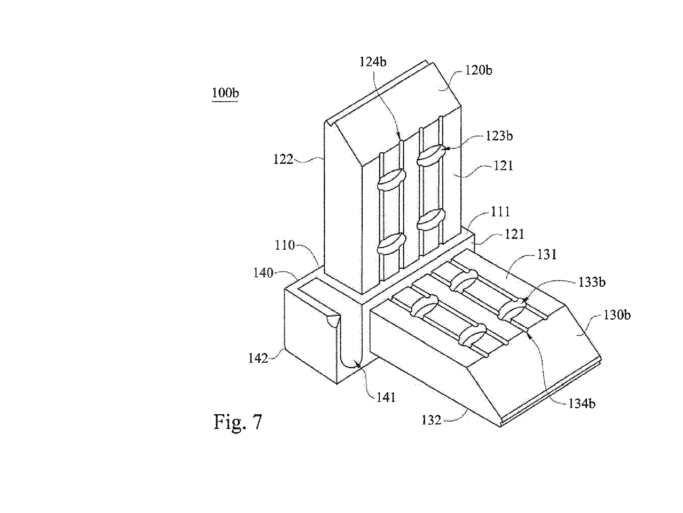

Fig. 7 is a perspective view of the L-shaped corner joint 100b in accordance with the third embodiment of the present invention. The main difference between this embodiment and the first embodiment is that: the first joint arm 120b and the second joint arm 130b respectively have plural (such as four) first riveting holes 123a and plural (such as four) second riveting holes 133a. Therefore, the embodiment can be applied on different riveting machine, such as the riveting machine 400 having plural (such as four) first rivets 410 and plural (such as four) second rivets 420 (See Fig. 3).

Moreover, in this embodiment, the first joint arm 120b includes four first guiding rails 124b, and the second joint arm 130 includes four second guiding rails 134, in which the amount is different from the first guiding rails 124 and the second guiding rails 134 in the first embodiment.

### Embodiment 4

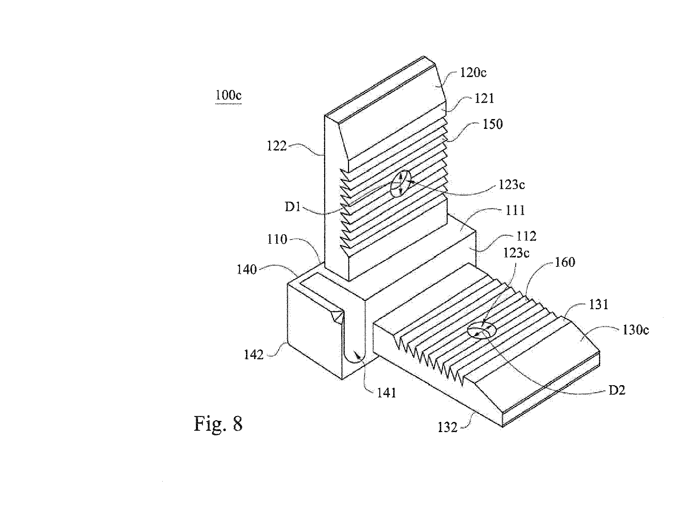

Fig. 8 is a perspective view of the L-shaped corner joint 100c in accordance with the fourth embodiment of the present invention. The main difference between this embodiment and the first embodiment is that: the L-shaped corner joint 100c includes a plurality of first toothing structures 150 and a plurality of second toothing structures 160. The first toothing structures 150 are disposed on the first joint arm 120c and can press against the first inner frame plate 210 (See Fig. 2) when the first joint arm 120c inserts in the first engaging groove 230 (See Fig. 2), so as to secure the first frame body 200 (See Fig. 2). Similarly, the second toothing structures 160 are disposed on the second joint arm 130c, and can press against the second inner frame plate 310 when the second joint arm 130c inserts in the second engaging groove 330 (See Fig. 2), so as to secure the second frame body 300 (See Fig. 2).

In this embodiment, as shown in Fig. 8, a lengthwise direction of each of the first toothing structures 150 is substantially parallel to the first connecting surface 111. Similarly, a lengthwise direction of each of the second toothing structures 160 is substantially parallel to the second connecting surface 112.

In this embodiment, as shown in Fig. 8, the first riveting hole 123c is disposed among the first toothing structures 150. Similarly, the second riveting hole 133c is disposed among the second toothing structures 160.

### Example

The following Chart 1 includes the experimental data from the tension force experiments to different examples of the L-shaped corner joint 100c. The ambient temperature of the experiments is 25±3 °C, and the ambient humidity is 55±20%. In Chart 1, the maximal tension force refers to the force required for separating the first frame body 200 or the second frame body 300 from the L-shaped corner joint 100c.

**Chart 1**

| first diameter D1 and second diameter D2 (mm) | Maximal tension force (kg) |
|---|---|
| 10 | 225 |
| 6 | 107.9 |
| 0 | 50.81 |

It is obtained from Chart 1 that the greater the first diameter D1 of the first riveting hole 123c and the second diameter D2 of the second riveting hole 133 are, the higher the maximal tension force is. In other words, when the first diameter D1 and the second diameter D2 is greater, it is more difficult to separate the first frame body 200 or the second frame body 300 from the L-shaped corner joint 100c. Therefore, when the first diameter D1 and the second diameter D2 are greater, the L-shaped corner joint 100c can secure the first frame body 200 or the second frame body 300 more steadily.

Moreover, it is also obtained from Chart 1 that when the first diameter D1 and the second diameter D2 is zero, namely, the first joint arm 120c has no first riveting hole 123c, and the second joint arm 130c also has no second riveting hole 133c, the maximal tension force is only 50.81 kg. In contrast, when the first diameter D1 and the second diameter D2 is 10mm. The maximal tension force can be 225 kg, which is about 4.4 times of 50.81 kg. Therefore, the first riveting hole 123c and the second riveting hole 133c can improve the ability for securing the first frame body 200 and the second frame body 300.

## Claims

1. A frame of a photovoltaic panel, **characterized by** comprising:
at least one L-shaped corner joint (100, 100b, 100c) comprising:
a support (110);
a first joint arm (120, 120a, 120b, 120c); and
a second joint arm (130, 130b, 130c), wherein the first joint arm (120, 120a, 120b, 120c) and the second joint arm (130, 130b, 130c) are respectively disposed on different surfaces of the support (110), and the first joint arm (120, 120a, 120b, 120c) and the second joint arm (130, 130b, 130c) respectively have at least one first riveting hole (410)and at least one second riveting hole (420);
at least one frame body having a first outer frame plate (220) and a first inner frame plate (210), wherein the first outer frame plate (220) and the first inner frame plate (210) are spatially separated and define a first engaging groove (230) therebetween, wherein the first joint arm (120, 120a, 120b, 120c) is inserted in the first engaging groove (230), and part of the first inner frame plate (210) is caved in the first riveting hole (410); and
at least one second frame body (300) having a second outer frame plate (320) and a second inner frame plate (310), wherein the second outer frame plate (320) and the second inner frame plate (310) are spatially separated and define a second engaging groove (330) therebetween, wherein the second joint arm (130, 130b, 130c) is inserted in the second engaging groove (330), and part of the second inner frame plate (310) is caved in the second riveting hole (420).

2. The frame of the photovoltaic panel of claim 1, **characterized in that** the first riveting hole has a first diameter D1 substantially satisfying: 5mm ≦ D1 ≦ 25mm;
wherein the second riveting hole has a second diameter (D2) D2 substantially satisfying: 5mm ≦ D2 ≦ 25mm.

3. The frame of the photovoltaic panel of any of claims 1 to 2, **characterized in that** the first joint arm (120, 120a, 120b, 120c) has a first inner surface (121), the first riveting hole (410) is disposed on the first inner surface (121), the first riveting hole has a first depth T1 along the direction substantially parallel to the normal direction of the first inner surface (121), and the first depth T1 substantially satisfies: 1.5mm ≦ T1 ≦ 7mm; and
wherein the second joint arm (130, 130b, 130c) has a second inner surface (131), the second riveting hole is disposed on the second inner surface (131), the second riveting hole has a second depth T2 along the direction substantially parallel to the normal direction of the second inner surface (131), and the second depth T2 substantially satisfies: 1.5mm ≦ T2 ≦ 7mm.

4. The frame of the photovoltaic panel of any of claims 1 to 3, **characterized by** further comprising:
a plurality of first ribs (270) disposed on the first inner frame plate (210), wherein the first joint arm (120, 120a, 120b, 120c) has a plurality of first guiding rails (124), wherein the first ribs (270) are inserted in the first guiding rails (124); and
a plurality of second ribs (370) disposed on the second inner frame plate (310), wherein the second joint arm (130, 130b, 130c) has a plurality of second guiding rails, and the second ribs are inserted in the second guiding rails.

5. The frame of the photovoltaic panel of any of claims 1 to 4, **characterized by** further comprising:
a plurality of first toothing structures (150) disposed on the first joint arm (120, 120a, 120b, 120c) and pressing against the first inner frame plate (210); and
a plurality of second toothing structures (160) disposed on the second joint arm (130, 130b, 130c) and pressing against the second inner frame plate (310).

6. The frame of the photovoltaic panel of any of claims 1 to 5, **characterized by** further comprising:
a panel holding part (140) disposed on the support (110), wherein the first frame body (200) and the second frame body (300) respectively includes a first clamping groove (260) and a second clamping groove (360), the panel holding part includes a holding groove, and the holding groove, the first clamping groove and the second clamping groove are spatially communicated.

7. The frame of the photovoltaic panel of any of claims 1 to 6, **characterized in that** the first joint arm (120, 120a, 120b, 120c) comprises a first guiding structure (125) and a second guiding structure (126) disposed on a front end of the first joint arm opposite to the support, the second joint arm (130, 130b, 130c) comprises a third guiding structure (135) and a fourth guiding structure (136) disposed on a front end of the second joint arm opposite to the support, and the first guiding structure, the second guiding structure, the third guiding structure and the fourth guiding structure are chamfers.

8. A L-shaped corner joint (100, 100b, 100c), **characterized by** comprising:
a support (110) having a first connecting surface (111) and a second connecting surface (112), wherein the first connecting surface adjoins the second connecting surface;
a first joint arm (120, 120a, 120b, 120c) disposed on the first connecting surface, and the first joint arm has at least one first riveting hole, wherein the first riveting hole has a first diameter D1 substantially satisfying: 5mm ≦ D1 ≦ 25mm; and
a second joint arm (130, 130b, 130c) disposed on the second connecting surface, and the second joint arm has at least one second riveting hole, wherein the second riveting hole has a second diameter D2 substantially satisfying: 5mm ≦ D2 ≦ 25mm.

9. The L-shaped corner joint of claim 8, **characterized in that** the first joint arm has a first inner surface, the first riveting hole is disposed on the first inner surface, the first riveting hole has a first depth T1 along the direction substantially parallel to the normal direction of the first inner surface, and the first depth T1 substantially satisfies: 3mm ≦ T1 ≦ 6mm; and
wherein the second joint arm has a second inner surface, the second riveting hole is disposed on the second inner surface, the second riveting hole has a second depth T2 along the direction substantially parallel to the normal direction of the second inner surface, and the second depth T2 substantially satisfies: 3mm ≦ T2 ≦ 6mm.

10. The frame of the photovoltaic panel of any of claim 1 to 7 or the L-shaped corner joint of any of claim 8 to 9, **characterized in that** the first joint arm has a first inner surface (121) and a first outer surface (122) opposite to the first inner surface, and the first riveting hole crosses the first inner surface and the first outer surface; and
wherein the second joint arm has a second inner surface (131) and a second outer surface (132) opposite to the second inner surface, and the second riveting hole crosses the second inner surface and the second outer surface.

11. The L-shaped corner joint of any of claims 8 to 10, **characterized by** further comprising:
a plurality of first toothing structures (150) disposed on the first joint arm, wherein a lengthwise direction of each of the first toothing structures is substantially parallel to the first connecting surface; and
a plurality of second toothing structures (160) disposed on the second joint arm, wherein a lengthwise direction of each of the second toothing structures is substantially parallel to the second connecting surface.

12. The L-shaped corner joint of any of claims 8 to 11, **characterized in that** the first joint arm comprises a plurality of first guiding rails, wherein a lengthwise direction of each of the first guiding rails is substantially perpendicular to the first connecting surface; and
wherein the second joint arm comprises a plurality of second guiding rails, wherein a lengthwise direction of each of the second guiding rails is substantially perpendicular to the second connecting surface.

13. The L-shaped corner joint of any of claims 8 to 12, **characterized by** further comprising:
a panel holding part (140) disposed on the support (110).

14. The frame of the photovoltaic panel of claim 6 or the L-shaped corner joint of claim 13, **characterized in that** the panel holding part comprises an outer corner (142), and the outer corner is arc-shaped.

15. The L-shaped corner joint of any of claims 8 to 14, **characterized in that** the first joint arm comprises a first guiding structure (125) and a second guiding structure (126) disposed on a front end of the first joint arm opposite to the support, the second joint arm comprises a third guiding structure (135) and a fourth guiding structure (136) disposed on a front end of the second joint arm opposite to the support, and the first guiding structure, the second guiding structure, the third guiding structure and the fourth guiding structure are chamfers.
